# EUROPÄISCHE PATENTANMELDUNG

(11) **EP 3 088 857 A1**
(43) Veröffentlichungstag der Anmeldung: **02.11.2016**
(21) Anmeldenummer: 16159762.0
(22) Anmeldetag: 11.03.2016
(51) Int. Cl.: G01J 5/20, G01J 5/02

(54) **VERFAHREN UND MIKROBOLOMETER ZUM MESSEN EINER TEMPERATUR UND VERFAHREN ZUM HERSTELLEN EINES MIKROBOLOMETERS**

(30) Priorität: 29.04.2015 DE 102015207855
(71) Anmelder: ROBERT BOSCH GMBH, 70442 Stuttgart (DE)
(72) Erfinder: Gross, David, 70435 Stuttgart (DE); Utermoehlen, Fabian, 71229 Leonberg (DE)

(57) **Zusammenfassung**

Die Erfindung betrifft ein Verfahren zum Messen einer Temperatur. In einem Schritt des Erfassens wird eine temperaturabhängige elektrische Größe an einer Schottky-Barriere (118, 122) einer der Temperatur ausgesetzten Kohlenstoffnanoröhre (124) erfasst. In einem Schritt des Ermittelns wird ein Wert der Temperatur unter Verwendung der elektrischen Größe und einer Verarbeitungsvorschrift ermittelt.

## Beschreibung

### Stand der Technik

Die vorliegende Erfindung bezieht sich auf ein Verfahren zum Messen einer Temperatur, auf ein Mikrobolometer zum Messen einer Temperatur sowie auf ein Verfahren zum Herstellen eines Mikrobolometers.

Bei einem Mikrobolometer wird eine Absorptionsfläche durch auftreffende Infrarotstrahlung (IR-Strahlung) erwärmt. Eine resultierende Temperatur der Absorptionsfläche ist ein Maß für eine Intensität der Infrarotstrahlung. Durch Messen der Temperatur kann auf die Intensität der Infrarotstrahlung zurückgeschlossen werden.

### Offenbarung der Erfindung

Vor diesem Hintergrund werden mit dem hier vorgestellten Ansatz ein Verfahren zum Messen einer Temperatur, ein Mikrobolometer zum Messen einer Temperatur sowie ein Verfahren zum Herstellen eines Mikrobolometers gemäß den Hauptansprüchen vorgestellt. Vorteilhafte Ausgestaltungen ergeben sich aus den jeweiligen Unteransprüchen und der nachfolgenden Beschreibung.

Bei dem hier vorgestellten Ansatz wird beispielsweise ein Kohlenstoffnanoröhrenfeldeffekttransistor oder eine Kohlenstoffnanoröhren-Schottky-Diode zum Messen einer Temperatur verwendet.

Ein Kohlenstoffnanoröhrenfeldeffekttransistor bzw. eine Kohlenstoffnanoröhren-Schottky-Diode kann als temperaturempfindlicher Bestandteil in einem Mikrobolometer verwendet werden. Dabei stellt der Kohlenstoffnanoröhrenfeldeffekttransistor bzw. die Kohlenstoffnanoröhren-Schottky-Diode ein elektrisches Signal bereit, das eine Temperatur einer Absorptionsfläche des Mikrobolometers abbildet.

Insbesondere der Stromfluss an einer Schottky-Barriere an einem der Kontakte zu der Kohlenstoffnanoröhre ist stark temperaturabhängig und damit gut dazu geeignet, als das die Temperatur repräsentierende elektrische Signal verwendet zu werden.

Es wird ein Verfahren zum Messen einer Temperatur vorgestellt, wobei das Verfahren die folgenden Schritte aufweist:
Erfassen einer temperaturabhängigen elektrischen Größe an einer Schottky-Barriere an einer der Temperatur ausgesetzten oder aussetzbaren Kohlenstoffnanoröhre; und
Ermitteln eines Werts der Temperatur unter Verwendung der elektrischen Größe und einer Verarbeitungsvorschrift.

Eine Schottky-Barriere kann sich an einem Übergang von einem ersten Material zu einem zweiten Material ausbilden. Insbesondere wenn das erste Material ein Metall und das zweite Material ein Halbleiter ist. Zwischen den Materialien bildet sich ein sprunghafter Anstieg eines zu überwindenden Energiepotenzials aus, der eine Potenzialbarriere für Elektronen darstellt. Elektronen können die Potenzialbarriere auf konventionellem Weg erst ab einer, von der Barrierenhöhe abhängigen Energie, die durch die angelegte Spannung mitbestimmt ist, überwinden. Die Transmissionswahrscheinlichkeit durch die Potentialbarriere ist ebenfalls energieabhängig und gibt den Tunnelstrom an. Die Energieverteilung der Elektronen ist hierbei temperaturabhängig. Ein Stromfluss an dieser Potenzialbarriere ist demzufolge, bei konstanter angelegter Potentialdifferenz über die Barriere, ebenfalls temperaturabhängig. Entscheidend für den Temperatureffekt ist der Unterschied der Energieverteilung der Elektronen, deren Energie nicht zum klassischen Überschreiten der Barriere ausreicht. Ein Zusammenhang zwischen einer messbaren Stromstärke, einer angelegten elektrischen Spannung und der Temperatur ist in der Verarbeitungsvorschrift hinterlegt. Dabei kann die Verarbeitungsvorschrift beispielsweise in einem Algorithmus beinhaltet und/oder in einer Tabelle beziehungsweise Kennlinie abgelegt sein.

Die elektrische Größe kann einen Stromfluss oder eine Spannung darstellen. Als die elektrische Größe kann beispielsweise ein Tunnelstrom an der Schottky-Barriere erfasst werden. Der Tunnelstrom weist eine besonders hohe Temperaturabhängigkeit auf. Ein Tunnelstrom repräsentiert einen Stromfluss, der nur durch eine quantenmechanische Betrachtung der Zustände an der Schottky-Barriere erklärbar ist. Dabei tunneln Elektronen durch die Grenzfläche zwischen den Materialien, obwohl die daran anliegende Spannung dazu im eigentlichen Sinne nicht groß genug ist. Wird eine Spannung als elektrische Größe erfasst, so kann eine dazu erforderliche Spannungsmessung bei konstantem Strom durchgeführt werden.

Weiterhin wird ein Mikrobolometer mit folgenden Merkmalen vorgestellt:
einer thermisch von einem Substrat entkoppelten Absorptionsfläche zum Absorbieren von Infrarotstrahlung; und
einer thermisch mit der Absorptionsfläche gekoppelten Kohlenstoffnanoröhre, die zumindest an einem elektrischen Kontakt eine Schottky-Barriere zum Erfassen einer von einer Temperatur der Absorptionsfläche abhängigen elektrischen Größe aufweist.

Unter einem Mikrobolometer kann ein Pixel eines Bildsensors insbesondere für Infrarotstrahlung verstanden werden. Der
Kohlenstoffnanoröhrenfeldeffekttransistor bzw. die Kohlenstoffnanoröhren-Schottky-Diode ist das temperaturempfindliche Bauelement des Mikrobolometers.

Die Kohlenstoffnanoröhre kann halbleitende Eigenschaften aufweisen. Damit kann die Schottky-Barriere zwischen einem Metall des Sourcekontakts oder des Drainkontakts bzw. der Anode oder der Kathode und der Kohlenstoffnanoröhre ausgebildet sein. Durch die Kohlenstoffnanoröhre können die tunnelnden Elektronen besonders effektiv abgeleitet werden.

Die Kohlenstoffnanoröhre kann mehrwandig ausgeführt sein. Dies vereinfacht die Reproduzierbarkeit.

Die halbleitende Kohlenstoffnanoröhre kann Bestandteil eines Kohlenstoffnanoröhrenfeldeffekttransistors oder einer Kohlenstoffnanoröhren-Schottky-Diode sein. Bei einem Kohlenstoffnanoröhrenfeldeffekttransistor kann die elektrische Größe, also elektrischer Stromfluss oder elektrische Spannung, besonders gut erfasst werden.

Die Absorptionsfläche kann durch zumindest ein Ärmchen mechanisch mit dem Substrat verbunden sein. In dem zumindest einen Ärmchen können elektrische Anschlussleitungen des Kohlenstoffnanoröhrenfeldeffekttransistors angeordnet sein. Durch Ärmchen mit geringem Querschnitt wird ein hoher Wärmewiderstand erreicht, wodurch die Absorptionsfläche besonders gut thermisch von dem Substrat entkoppelt ist.

Die Anschlussleitungen können aus einem elektrisch leitenden Material mit einem hohen Wärmewiderstand ausgeführt sein. Das Material kann insbesondere einen Titananteil aufweisen. Durch ein schlecht wärmeleitendes Material kann die Absorptionsfläche thermisch besser von dem Substrat entkoppelt sein.

In die Absorptionsfläche können plasmonische Absorber eingebettet sein. Durch die Absorber kann ein größerer Anteil der Infrarotstrahlung absorbiert werden, wodurch eine Empfindlichkeit des Mikrobolometers erhöht ist.

Die Absorptionsfläche kann beabstandet zu dem Substrat angeordnet sein. Das Substrat kann zumindest im Bereich der Absorptionsfläche einen Reflektor zum Reflektieren der Infrarotstrahlung auf die Absorptionsfläche aufweisen. Durch einen Abstand zum Substrat kann die Absorptionsfläche gut thermisch von dem Substrat entkoppelt sein. Durch den Reflektor wird die Infrarotstrahlung erneut auf die Absorptionsfläche reflektiert, wodurch die Absorption der Infrarotstrahlung erhöht ist.

Ferner wird ein Verfahren zum Herstellen eines temperaturempfindlichen Sensorpixels vorgestellt, wobei das Verfahren die folgenden Schritte aufweist:
Erstellen einer thermisch von einem Substrat entkoppelten Absorptionsfläche zum Absorbieren von Infrarotstrahlung; und
Koppeln eines Kohlenstoffnanoröhrenfeldeffekttransistors bzw. einer Kohlenstoffnanoröhren-Schottky-Diode mit der Absorptionsfläche, wobei die Kohlenstoffnanoröhre zumindest an einem elektrischen Kontakt eine Schottky-Barriere zum Erfassen einer von einer Temperatur der Absorptionsfläche abhängigen elektrischen Größe aufweist.

Der hier vorgestellte Ansatz wird nachstehend anhand der beigefügten Zeichnungen beispielhaft näher erläutert. Es zeigen:
Fig. 1 ein Blockschaltbild eines Mikrobolometers gemäß einem Ausführungsbeispiel der vorliegenden Erfindung;
Fig. 2 ein Ablaufdiagramm eines Verfahrens zum Messen einer Temperatur gemäß einem Ausführungsbeispiel der vorliegenden Erfindung;
Fig. 3 eine Schnittdarstellung eines Mikrobolometers gemäß einem Ausführungsbeispiel der vorliegenden Erfindung;
Fig. 4 ein Banddiagramm eines Schnitts durch einen Nanoröhrenfeldeffekttransistor gemäß einem Ausführungsbeispiel der vorliegenden Erfindung; und
Fig. 5 ein Ablaufdiagramm eines Verfahrens zum Herstellen eines Mikrobolometers gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

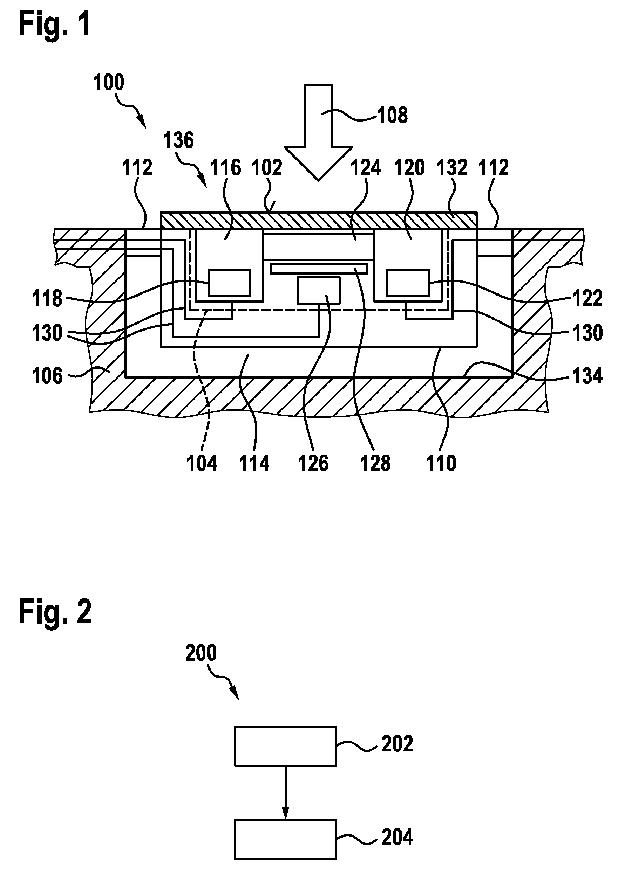

Fig. 1 zeigt ein Blockschaltbild eines Mikrobolometers 100 gemäß einem Ausführungsbeispiel der vorliegenden Erfindung. Das Mikrobolometer 100 weist eine Absorptionsfläche 102 und einen thermisch mit der Absorptionsfläche 102 gekoppelten Nanoröhrenfeldeffekttransistor 104 auf. Die Absorptionsfläche 102 ist thermisch von einem umgebenden Substrat 106 entkoppelt beziehungsweise isoliert. Die Absorptionsfläche 102 ist dazu ausgebildet, Infrarotstrahlung 108 zu absorbieren. Dabei stellt sich eine Gleichgewichtstemperatur der Absorptionsfläche 102 ein, die abhängig von einer Intensität der Infrarotstrahlung ist. Der Nanoröhrenfeldeffekttransistor 104 nimmt durch die thermische Kopplung zu der Absorptionsfläche 102 ebenfalls die Gleichgewichtstemperatur an.

Die Absorptionsfläche 102 und der Nanoröhrenfeldeffekttransistor 104 sind Bestandteile einer Insel 110. Die Insel 110 ist über Ärmchen 112 mechanisch mit dem Substrat 106 gekoppelt. Die Ärmchen 112 überbrücken einen Zwischenraum 114 zwischen der Insel 110 und dem Substrat 106.

Der Nanoröhrenfeldeffekttransistor 104 weist zumindest an einem ersten elektrischen Kontakt 116 eine erste Schottky-Barriere 118 auf. Im dargestellten Ausführungsbeispiel weist der Nanoröhrenfeldeffekttransistor 104 die erste Schottky-Barriere 118 an seinem Sourcekontakt 116 auf. In einem Ausführungsbeispiel weist der Nanoröhrenfeldeffekttransistor 104 an seinem Drainkontakt 120 eine zweite Schottky-Barriere 122 auf. Die Schottky-Barriere 122 kann auch ausschließlich an dem Drainkontakt 120 angeordnet sein. Zwischen dem Sourcekontakt 116 und dem Drainkontakt 120 ist zumindest eine Kohlenstoffnanoröhre 124 mit halbleitenden Eigenschaften angeordnet. Die Gateelektrode 126 des Nanoröhrenfeldeffekttransistors 104 ist durch eine Isolierschicht 128 von der Kohlenstoffnanoröhre 124 elektrisch isoliert.

Die Kontakte 116, 120, 126 sind über elektrisch leitende Leiterbahnen 130 in den Ärmchen 112 mit einer hier nicht dargestellten Auswerteschaltung verbunden. Dabei weisen die Leiterbahnen 130 eine geringe Wärmeleitfähigkeit auf, um die thermische Entkopplung der Insel 110 von dem Substrat 106 zu verbessern.

In einem Ausführungsbeispiel sind in die Absorptionsfläche 102 plasmonische Absorber 132 eingelagert. Durch die plasmonischen Absorber 132 wird die Absorption der Infrarotstrahlung 108 verbessert. Insbesondere werden vorbestimmte Wellenlängenbänder der Infrarotstrahlung 108 mit einem verbesserten Wirkungsgrad absorbiert.

Die Insel 110 ist in einer Tasche des Substrats 106 angeordnet. In einem Ausführungsbeispiel ist auf einer der Insel 110 gegenüberliegenden Seite des Zwischenraums 114 ein Reflektor 134 zum Reflektieren der Infrarotstrahlung 108 auf die Insel 110 beziehungsweise der Absorptionsfläche 102 angeordnet, wodurch eine weitere Verbesserung der Absorption der Infrarotstrahlung 108 erreicht wird.

In einem Ausführungsbeispiel weist das Mikrobolometer 100 als temperaturempfindliches Bauelement eine Kohlenstoffnanoröhren-Schottky-Diode 136 auf. Die Kohlenstoffnanoröhren-Schottky-Diode 136 besteht aus der Kohlenstoffnanoröhre 124 und einem metallischen Kontakt 116. Zwischen dem Kontakt 116 und der Kohlenstoffnanoröhre 124 ist die Schottky-Barriere 118 ausgebildet. Über verschiedene Metalle 116 kann eine Potenzialhöhe beziehungsweise eine Barrierenhöhe der Schottky-Barriere eingestellt werden. In diesem Ausführungsbeispiel sind die Kohlenstoffnanoröhre 124 und der Kontakt 116 über je einen elektrischen Anschluss 130 kontaktiert. Die Kohlenstoffnanoröhren-Schottky-Diode 136 kann Teil eines Transistors oder ein eigenständiges Element darstellen.

Gemäß einem Ausführungsbeispiel werden Kohlenstoffnanoröhren-Feldeffekttransistoren 104 als temperaturempfindliche Bauelemente für bildgebende Ferninfrarot Anwendungen verwendet, die auf Mikrobolometern 100 basieren. Kohlenstoffnanoröhren-Feldeffekttransistoren 104 können als Carbon Nanotube field effect transistors bezeichnet werden.

Zur Herstellung eines Mikrobolometers 100 wird prinzipiell eine thermisch isolierte Insel 110 bereitgestellt, die einen IR-Absorber 102 und mindestens ein temperatursensitives Bauelement 104 enthält, welches die Erwärmung des Pixels 110 infolge der absorbierten IR-Strahlung 108 detektiert.

Als temperatursensitives Bauteil kann ein Widerstand, bestehend aus amorphem Si, Metall oder Vanadiumoxid (VOₓ) eingesetzt werden. Es können auch pn-Dioden verwendet werden. Bei konstantem Strom nimmt bei pn-Dioden die Spannung in Vorwärtsrichtung linear mit ansteigender Temperatur ab. Die Sensitivität pro pn-Übergang liegt bei etwa -2 mV/K bei einem Strom von 1 µA und kann durch Reihenschaltung mehrerer Dioden additiv erhöht werden.

Gemäß einem Ausführungsbeispiel werden Kohlenstoff-Nanoröhren (CNT) 124 im Aufbau als Feldeffekttransistoren (CNTFET) 104 bzw. zumindest als Schottky-Dioden 136 verwendet. Da der Tunnelstrom durch die Schottkybarrieren 118, 122 an den Kontakten 116, 120 von den Fermiverteilungen der beiden Kontaktmetalle 116, 120 abhängt, kann unter Verwendung des Stroms die Temperatur bestimmt werden.

Gemäß einem Ausführungsbeispiel wird ein Mikrobolometer-Pixel 100 unter Verwendung von CNT 124 für Thermografieanwendungen realisiert. Die aus der absorbierten IR-Strahlung 108 resultierende Pixeltemperatur wird über die thermische Abhängigkeit des Tunnelstroms von CNTFET 104 bzw. CNT-Schottky-Dioden 136 bestimmt.

Der vertikale Abstand zwischen Substrat 106 und Insel 110 kann etwa 1/4 der zu detektierenden Wellenlänge der Strahlung betragen.

Optional kann am Boden des Substrats 106 oder am Boden der Insel 110 ein weiterer ganzflächiger Metallspiegel 134 platziert sein. Der Metallspiegel 134 kann als Spiegel eines λ/4 Resonators bzw. als zweites Teilstück eines plasmonischen Absorbers 132 ausgebildet sein.

Fig. 2 zeigt ein Ablaufdiagramm eines Verfahrens 200 zum Messen einer Temperatur gemäß einem Ausführungsbeispiel der vorliegenden Erfindung. Das Verfahren 200 weist einen Schritt 202 des Erfassens und einen Schritt 204 des Ermittelns auf. Im Schritt 202 des Erfassens wird ein temperaturabhängiger Stromfluss an einer Schottky-Barriere einer der Temperatur ausgesetzten Kohlenstoffnanoröhre erfasst. Der Schritt 202 des Erfassens ist auf dem in Fig. 1 dargestellten Mikrobolometer ausführbar. Im Schritt 204 des Ermittelns wird ein Wert der Temperatur unter Verwendung des Stromflusses und einer Verarbeitungsvorschrift ermittelt. Der Schritt 204 des Ermittelns ist in der in Fig. 1 nicht dargestellten Auswerteschaltung ausführbar.

Vorteilhafterweise ergibt sich eine sehr schnelle Auslesung der Temperaturen. Ein low-power-Betrieb ist durch gepulste Auslesung der Transistoren möglich. Der hier vorgestellte Ansatz ist ferner CMOS kompatibel und günstig in der Herstellung. Es kann etwa eine doppelte Empfindlichkeit im Vergleich zu resistiven Metallbolometern erreicht werden.

Das hier vorgestellte Bauelement erlaubt eine gepulste und hochfrequente und verlustarme Auslesung. Durch die Funktionsweise der Kohlenstoffnanoröhre in Verbindung mit einer Schottky-Barriere, geprägt durch einen ballistischen Transport und die Schottky-Barrieren an dem Sourcekontakt und/oder dem Drainkontakt bzw. an der Anode und/oder Kathode besitzen die Bauelemente hauptsächlich eine Temperaturabhängigkeit durch die Fermiverteilung an den Kontakten.

Bei einem Betrieb in der Art, dass die Barriere am Drainkontakt auf das Niveau des Potenzials innerhalb der CNT gezogen wird, ist der Strom nur durch den Emissionsprozess von Ladungsträgern vom Sourcekontakt her bestimmt. Dieser wiederum wird bei hohen Schottkybarrieren von Tunneltransmission dominiert. Hier ergibt sich durch die Fermiverteilung des Kontaktes eine exponentielle Abhängigkeit von der Temperatur desselben.

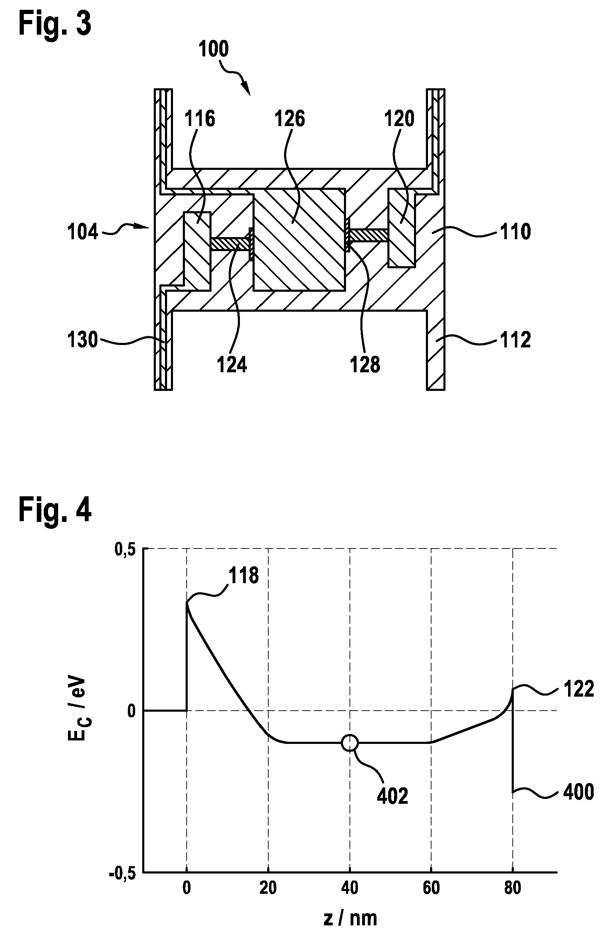

Fig. 3 zeigt eine Schnittdarstellung eines Mikrobolometers 100 gemäß einem Ausführungsbeispiel der vorliegenden Erfindung. Das Mikrobolometer 100 entspricht im Wesentlichen dem Mikrobolometer in Fig. 1. Eine Schnittebene der Schnittdarstellung verläuft im Bereich der Kohlenstoffnanoröhre 124. Das hier dargestellte Mikrobolometer 100 weist eine rechteckige Insel 110 auf und ist über vier Ärmchen 112 mechanisch mit dem nicht dargestellten Substrat gekoppelt. In drei der Ärmchen 112 ist je eine elektrische Leiterbahn 130 zum Kontaktieren der Kohlenstoffnanoröhre 124 und ihres mindestens einen metallischen Kontakts 116, 120 integriert. Die vier Ärmchen 112 sind an den vier Ecken der Insel 110 angeordnet. Die Insel 110 kann aus dem gleichen Material wie das Substrat bestehen. In dem dargestellten Ausführungsbeispiel besteht die Insel 110 aus Siliziumdioxid SiO₂ und das Substrat aus Si. Das Kohlenstoffnanoröhrchen 124 ist hier an einer Längsachse der Insel 110 ausgerichtet.

In dem Ausführungsbeispiel als Kohlenstoffnanoröhrenfeldeffekttransistors 104 sind an den zwei gegenüberliegenden Enden des Kohlenstoffnanoröhrchens 124 der Sourcekontakt 116 und der Drainkontakt 120 angeordnet. Der Gatekontakt 126 ist mittig zwischen dem Sourcekontakt 116 und dem Drainkontakt 120 über dem Kohlenstoffnanoröhrchen 124 angeordnet. Der Gatekontakt 126 ist durch eine Oxidschicht 128 von dem Kohlenstoffnanoröhrchen 124 elektrisch isoliert.

In einem Ausführungsbeispiel weist das Mikrobolometer 100 mindestens eine CNT 124 auf einer freigestellten Si-Insel oder SiO₂-Insel 110 auf. Bei den Kohlenstoffnanoröhren 124 kann es sich um halbleitende singlewall beziehungsweise einwandige oder multiwall beziehungsweise mehrwandige CNT 124 handeln. Die Kohlenstoffnanoröhre 124 weist zwei voneinander getrennte elektrische Kontakte 116, 120 beziehungsweise einen Sourcekontakt 116 und einen Drainkontakt 120 und optional einen elektrisch isolierten Kontakt 126 zwischen den beiden Kontakten 116, 120 beziehungsweise einen Drainkontakt 126 auf. Mindestens einer der beiden Kontakte 116, 120, also der Sourcekontakt 116 und/oder der Drainkontakt 120 ist derart ausgebildet, dass sich eine Schottky-Barriere 118, 122 ausbildet. Die Insel 110 ist mechanisch und elektrisch mit mindestens einem Ärmchen 112 mit dem Substrat verbunden. Bevorzugt werden drei Ärmchen 112 verwendet, die jeweils einen Leiter 130 zur elektrischen Kontaktierung beinhalten. Die metallischen Leiterbahnen 130 sind aus einem thermisch schlecht wärmeleitfähigen Material, wie beispielsweise Titan. Die Leiterbahnen 130 weisen beispielsweise 100 nm Dicke bei einer Breite von 500 nm oder weniger auf.

In einem Ausführungsbeispiel ist eine dicke Oxidschicht als IR-Absorber auf dem gesamten Pixel 110 aufgebracht. Die Oxidschicht weist insbesondere eine Schichtdicke von ca. 1,6 µm auf. In der Oxidschicht können weitere Metallelemente als plasmonischer Absorber eingebracht sein, die aus ganzflächigen Metallspiegeln und symmetrischen Elementen, wie Discs oder Kreuzen bestehen und die wiederum durch eine Oxidschicht entsprechender Dicke voneinander getrennt sind. Die Oxidschicht kann auf THz angepasste Antennenstrukturen aus Metall enthalten, um die Absorption zu erhöhen.

Das Pixel 100 oder ein Array aus n x m Pixeln 100 kann durch ein Niedertemperaturbondverfahren vakuumverkappt sein.

Bei einem Bildsensor sind viele Inseln 110 in Arrays aus n x m Pixeln 100 angeordnet.

Fig. 4 zeigt ein Banddiagramm eines Schnitts durch einen Kohlenstoffnanoröhrenfeldeffekttransistor gemäß einem Ausführungsbeispiel der vorliegenden Erfindung. Dargestellt ist der Verlauf der unteren Leitungsbandkante 400 entlang des Kohlenstoffnanoröhrenfeldeffekttransistors CNTFET, wie er beispielsweise in den Figuren 1 und 3 dargestellt ist. Der Kreis 402 markiert das Potenzial innerhalb des Kohlenstoffnanoröhrchens CNT. Deutlich zu sehen sind die Schottky-Barrieren 118, 122 an source und drain.

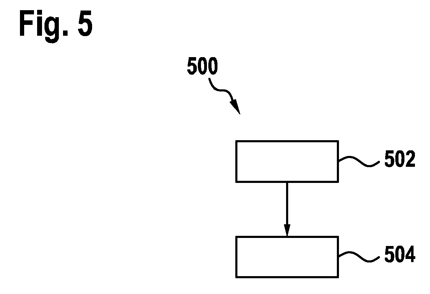

Fig. 5 zeigt ein Ablaufdiagramm eines Verfahrens 500 zum Herstellen eines Mikrobolometers gemäß einem Ausführungsbeispiel der vorliegenden Erfindung. Ein mit diesem Verfahren 500 hergestelltes Mikrobolometer entspricht im Wesentlichen einem der in den Figuren 1 und 3 dargestellten Mikrobolometern. Das Mikrobolometer kann dabei als Sensorpixel bezeichnet werden. Das Herstellungsverfahren 500 weist einen Schritt 502 des Erstellens und einen Schritt 504 des Koppelns auf. Im Schritt 502 des Erstellens wird eine thermisch von einem Substrat entkoppelte Absorptionsfläche zum Absorbieren von Infrarotstrahlung erstellt. Im Schritt 504 des Koppelns wird eine Kohlenstoffnanoröhre mit der Absorptionsfläche gekoppelt. Dabei weist das Kohlenstoffnanoröhrchen zumindest an einem elektrischen Kontakt eine Schottky-Barriere zum Erfassen eines von einer Temperatur der Absorptionsfläche abhängigen Stromflusses auf.

In einem Ausführungsbeispiel des Verfahrens 500 zum Herstellen des Mikrobolometerpixels mit mindestens einer halbleitenden Kohlenstoffnanoröhre beziehungsweise CNT auf einer freigestellten Si- oder SiO₂-Insel wird im Schritt 502 des Erstellens ein geeigneter Substratwafer bereitgestellt. Der Substratwafer kann beispielsweise bereits Kavernen durch einen porös Si Ätzprozess enthalten, auf denen eine Epi-Si-Schicht aufgewachsen wurde. Ebenso kann ein Wafer aus Silizium auf einem Isolator SOI (Silicon on Insulator) bereitgestellt werden und die Kaverne durch Opferschichtätzen der SiO₂ Schicht bereitgestellt werden. Ebenso kann eine aus Lack aufgebaute freigestellte Membran verwendet werden.

Im Schritt 504 des Koppelns wird zumindest eine Kohlenstoffnanoröhre (CNT) durch einen geeigneten chemischen Gasphasenabscheidungsprozess (CVD) oder durch einen Druckprozess von CNT-haltigen Flüssigkeiten auf dem Substratwafer abgeschieden beziehungsweise auf den Substratwafer aufgebracht.

Weiterhin wird im Schritt 504 des Koppelns eine nichtleitende erste Schicht ganzflächig aufgebracht. Bei der Ausführung als Feldeffekttransistor weist diese nichtleitende erste Schicht die Funktion eines Gateoxids auf.

Anschließend wird diese erste Schicht in Kontaktbereichen partiell geöffnet. Insbesondere wird die erste Schicht in einem für den Sourcekontakt und den Drainkontakt vorgesehenen Bereich partiell geöffnet.

Auf die erste nichtleitende Schicht wird ganzflächig ein erstes Metall abgeschieden. Das erste Metall wird derart strukturiert, dass eine elektrische Kontaktierung der Kohlenstoffnanoröhre zum Substrat möglich ist.

In einem Ausführungsbeispiel wird ein zweites Metall ganzflächig abgeschieden und strukturiert, um unterschiedliche Metalle zum Kontaktieren über die Ärmchen und direkt an der CNT zu erhalten und um gezielt die Schottky-Barrierenhöhe einzustellen.

In einem Ausführungsbeispiel wird der Sourcekontakt und/oder der Drainkontakt aus dem ersten Metall aufgebaut, während die die elektrischen Zuleitungen aus dem zweiten Metall aufgebaut werden, um an einer Kontaktstelle zwischen dem ersten Metall und der Kohlenstoffnanoröhre beziehungsweise zwischen dem zweiten Metall und der Kohlenstoffnanoröhre gezielt die Schottky-Barrierenhöhe einzustellen.

Im Schritt 502 des Erstellens wird anschließend eine zweite nichtleitende Schicht als Absorptionsfläche abgeschieden. Diese zweite nichtleitende Schicht wird im Bereich der Halteärmchen zurückgedünnt.

Abschließend wird im Schritt 502 des Erstellens die Insel beispielsweise durch Trenchen bis zur SOI Schicht und Entfernen der Oxid-Schicht oder Trenchen bis zur bereits im Wafer vorhandenen Kaverne oder durch Opferschichtätzen eines geeigneten Opferlackes freigestellt.

Vorteilhafterweise sind bei dem hier vorgestellten Ansatz wenige Prozessschritte 502, 504 notwendig.

Alle verwendeten Prozessschritte 502, 504, speziell das Freistellen des Pixels, erfolgen nach üblichen Verfahren der Halbleiterindustrie.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Messen einer Temperatur, wobei das Verfahren (200) die folgenden Schritte aufweist:
Erfassen (202) einer temperaturabhängigen elektrischen Größe an einer Schottky-Barriere (118, 122) an einer der Temperatur ausgesetzten oder aussetzbaren Kohlenstoffnanoröhre (124); und
Ermitteln (204) eines Werts der Temperatur unter Verwendung der elektrischen Größe und einer Verarbeitungsvorschrift.

2. Verfahren (200) gemäß Anspruch 1, bei dem im Schritt (202) des Erfassens als die elektrische Größe ein Tunnelstrom an der Schottky-Barriere (118, 122) erfasst wird.

3. Mikrobolometer (100) mit folgenden Merkmalen:
einer thermisch von einem Substrat (106) entkoppelten Absorptionsfläche (102) zum Absorbieren von Infrarotstrahlung (108); und
einer thermisch mit der Absorptionsfläche (102) gekoppelten Kohlenstoffnanoröhre (124), die zumindest an einem elektrischen Kontakt (116, 120) eine Schottky-Barriere (118, 122) zum Erfassen einer von einer Temperatur der Absorptionsfläche (102) abhängigen elektrischen Größe aufweist.

4. Mikrobolometer (100) gemäß Anspruch 3, bei dem die Kohlenstoffnanoröhre (124) halbleitende Eigenschaften aufweist.

5. Mikrobolometer (100) gemäß Anspruch 4, bei dem die Kohlenstoffnanoröhre (124) mehrwandig ausgeführt ist.

6. Mikrobolometer (100) gemäß einem der vorangegangenen Ansprüche, bei dem die Kohlenstoffnanoröhre (124) Bestandteil eines Kohlenstoffnanoröhrenfeldeffekttransistors (104) oder einer Kohlenstoffnanoröhren-Schottky-Diode (136) ist.

7. Mikrobolometer (100) gemäß einem der vorangegangenen Ansprüche, bei dem die Absorptionsfläche (102) durch zumindest ein Ärmchen (112) mechanisch mit dem Substrat (106) verbunden ist, wobei in dem zumindest einen Ärmchen (112) elektrische Anschlussleitungen (130) des Kohlenstoffnanoröhrenfeldeffekttransistors (104) angeordnet sind.

8. Mikrobolometer (100) gemäß Anspruch 6, bei dem die Anschlussleitungen (130) aus einem elektrisch leitenden Material mit einem hohen Wärmewiderstand ausgeführt sind, wobei das Material insbesondere einen Titananteil aufweist.

9. Mikrobolometer (100) gemäß einem der vorangegangenen Ansprüche, bei dem in die Absorptionsfläche (102) plasmonische Absorber (132) eingebettet sind.

10. Mikrobolometer (100) gemäß einem der vorangegangenen Ansprüche, bei dem die Absorptionsfläche (102) beabstandet zu dem Substrat (106) angeordnet ist, wobei das Substrat (106) zumindest im Bereich der Absorptionsfläche (102) einen Reflektor (134) zum Reflektieren der Infrarotstrahlung (108) auf die Absorptionsfläche (102) aufweist.

11. Verfahren (500) zum Herstellen eines temperaturempfindlichen Sensorpixels (100), wobei das Verfahren die folgenden Schritte aufweist:
Erstellen (502) einer thermisch von einem Substrat (106) entkoppelten Absorptionsfläche (102) zum Absorbieren von Infrarotstrahlung (108); und
Koppeln (504) eines Kohlenstoffnanoröhrenfeldeffekttransistors (104) bzw. einer Kohlenstoffnanoröhren-Schottky-Diode mit der Absorptionsfläche (102), wobei die Kohlenstoffnanoröhre (124) zumindest an einem elektrischen Kontakt (116, 120) eine Schottky-Barriere (118, 122) zum Erfassen einer von einer Temperatur der Absorptionsfläche (102) abhängigen elektrischen Größe aufweist.

12. Verwenden einer Schottky-Barriere (118, 122) an einer Kohlenstoffnanoröhre (124) zum Messen einer Temperatur.
